(19) Europäisches Patentamt
European Patent Office
Office européen des brevets

(11) **EP 1 672 480 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
***G06F 7/52*** *(2006.01)*

(21) Anmeldenummer: **05025055.4**

(22) Anmeldetag: **16.11.2005**

(54) **Verfahren und Vorrichtung zur Durchführung einer Multiplikations- oder Divisionsoperation in einer elektronischen Schaltung**

Method and device for carrying out a multiplication or division operation in an electronic circuit

Procédé et dispositif destinés à la réalisation d'une opération de multiplication ou de division dans un circuit électronique

(84) Benannte Vertragsstaaten:
**DE FR GB**

(30) Priorität: **14.12.2004 DE 102004060185**

(43) Veröffentlichungstag der Anmeldung:
**21.06.2006 Patentblatt 2006/25**

(73) Patentinhaber: **Infineon Technologies AG**
**85579 Neubiberg (DE)**

(72) Erfinder:
• **Bodenstorfer, Ernst**
**2345 Brunn am Gebirge (AT)**
• **Drewes, Christian**
**82110 Germering (DE)**
• **Niederholz, Jürgen**
**47647 Kerken (DE)**

(74) Vertreter: **Patentanwälte Lambsdorff & Lange**
**Dingolfinger Strasse 6**
**81673 München (DE)**

(56) Entgegenhaltungen:
WO-A1-00/72188          US-A- 4 507 676
US-A1- 2003 131 037     US-A1- 2004 186 871

## Beschreibung

Die Erfindung betrifft ein Verfahren und eine vorrichtung zur Berechnung einer Größe, welche von dem Ergebnis der Berechnung einer Multiplikation oder einer Divison abhängt, in einer elektronischen Schaltung. Insbesondere betrifft die Erfindung eine Schaltung zur Durchführung einer SINR-Schätzung (Signal-to-Noise and Interference Ratio) in einem Mobilfunkempfänger.

Multiplikations- oder Divisions-Operationen sind in modernen Chip-basierten Systemen (sogenannten System-on-Chip, SoC) in großer Anzahl auszuführen. Daher ist in solchen Systemen eine möglichst aufwandsgünstige Implementierung dieser Operationen von großer Bedeutung. Dabei ist zu berücksichtigen, dass die Verarbeitung von Signalen in derartigen Chip-basierten Systemen oftmals verschiedene Signalverarbeitungsphasen durchläuft und in unterschiedlichen Schaltungsbereichen durchgeführt wird. Typischerweise folgt auf eine analoge eine digitale Signalverarbeitungsphase, wobei sich die digitale Signalverarbeitung weiter unterteilen lässt in Hardware-basierte und Software-basierte Funktionalitätsrealisierung.

Analoge Signalverarbeitung wird inhärent durch analoge Schaltungen realisiert. Beispielsweise wird in einem Endgerät eines drahtlosen Kommunikationssystems das gesendete Signal über eine Antenne empfangen, im sogenannten Hochfrequenz-Frontend unter Verwendung analoger Schaltungen in das Basisband transferiert und analog/digital-umgesetzt. Die nachfolgende digitale Signalverarbeitung umfasst dann zunächst die Datendemodulation und die Decodierung, die aus Effizienzgründen oftmals weitgehend Hardware-basiert realisiert wird. Darauffolgende Signalverarbeitungsphasen werden dann zumeist auf einem digitalen Signalprozessor (DSP) oder einem Mikro-Controller, d.h. in einer Firmware- oder Software-Realisierung, programmiert, da diese Implementierungsform effizienter und/oder flexibler als die Hardware-Implementierung ist.

Im Folgenden wird lediglich der digitale Signalverarbeitungsbereich von Chip-basierten Systemen betrachtet. Eine grundlegende Entwurfsproblematik besteht darin, eine Funktionalitätsrealisierung zu finden, die die kritischen Anforderungen an den Stromverbrauch und den Chip-Flächenbedarf möglichst gut erfüllt. Hierfür ist es entscheidend, ob eine vorgegebene Funktionalität in Hardware oder Software bzw. Firmware oder verteilt realisiert wird.

Hardware-basierte Multiplikationen oder Divisionen mit reellen Zahlen treten beispielsweise bei Normierungen von in Hardware realisierten Akkumulationen von Summanden unterschiedlicher Anzahl auf. Die reellen Zahlen (Multiplikator oder Divisor) sind von der Anzahl der akkumulierten Summanden abhängig und variieren in einem a priori bekannten Zeitintervall. Beispielsweise ergibt sich im Fall von UMTS (Universal Mobile Telecommunications System) in einigen Teilen des Empfängers durch die in der UMTS Spezifikation geforderten variablen Datenraten die Schwierigkeit, dass bei Akkumulationen eine stark variierende Anzahl von Summanden auftritt, woraus die Notwendigkeit der Normierung der Akkumulationsergebnisse mit variablen Normierungsfaktoren folgt.

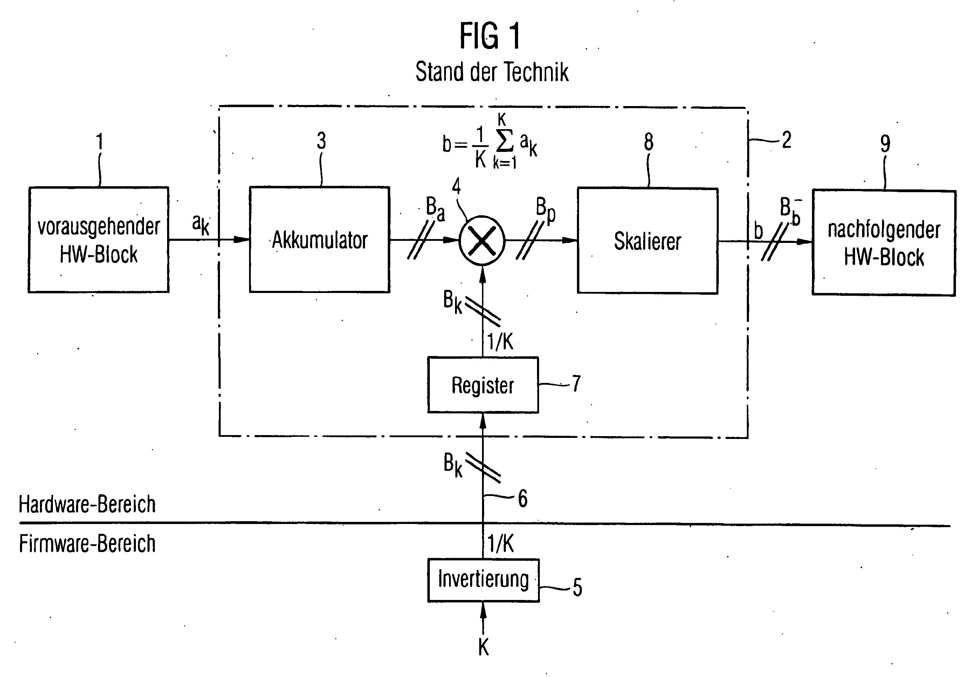

Fig. 1 zeigt eine konventionelle Realisierung zur Durchführung von Normierungen mit einem variablen Normierungsfaktor $1/K$. $K$ ist hier eine ganze Zahl. Die Schaltung ist in Hardware ("Hardware-Bereich") und Firmware ("Firmware-Bereich") implementiert. Von einem vorausgehenden Hardware-Block 1 werden Datenwerte $a_k$ eines Datenstroms bereitgestellt. $k$ bezeichnet die diskrete Zeit. Dieser Datenstrom $a_k$ wird einer Hardware-Schaltung 2 zur Mittelwertbildung zugeführt. Die Hardware-Schaltung 2 führt die Berechnung des Mittelwerts $b = \frac{1}{K} \sum_{k=1}^{K} a_k$ durch.

Hierfür werden mittels eines Akkumulators 3 die gewünschte Anzahl von $K$ Datenwerten $a_k$ akkumuliert (summiert). Die Summe $\sum_{k=1}^{K} a_k$ weist eine Wortbreite $B_a$ auf. Sie wird einem Multiplizierer 4 mit der benötigten Wortbreite $B_a$ zugeführt. Der andere Multiplikator (Normierungsfaktor $1/K$) wird teilweise in Firmware und teilweise in Hardware bereichnet. Durch Invertierung 5 in Firmware wird aus der Zahl $K$ der Multiplikator $1/K$ ermittelt. Dieser Multiplikator $1/K$ weist eine maximale Wortbreite $B_k$ auf. Er wird über einen Bus 6 der Wortbreite $B_k$ an den Hardware-Bereich übergeben und dort in einem Register 7 gespeichert. Der Multiplizierer 4 greift auf das Register 7 zu und berechnet den Wert $b$.

Der Wert $b$ weist eine maximale Wortbreite $Bp$ auf. Da die Zahlen in einer Festkommadarstellung vorliegen, wird typischerweise durch einen Skalierer 8 eine nachfolgende Wortbreitenreduktion von $B_p$ auf $B_b$ ($Bp > B_b$) durchgeführt. Der skalierte Mittelwert $b$ wird anschließend an einen nachfolgenden Hardware-Block 9 übergeben.

Die in Fig. 1 gezeigte Schaltung weist die folgenden Nachteile auf:

- Das Register 7 für die Speicherung des Multiplikators (hier $1/K$) und der Multiplizierer 4 müssen für die jeweiligen maximalen Wortbreiten $B_k$ ausgeführt sein.
- Der Firmware-Hardware-Transfer des Multiplikators (hier $1/K$) über den Bus 6 muss für die maximale Wortbreite des Multiplikators und dessen maximale Änderungsfrequenz ausgelegt sein. Die Änderungsfrequenz kann für kleine Werte von $K$ in der Größenordnung der Datenrate des Datenstroms $a_k$ liegen, das heisst sehr groß sein.

Die Druckschrift US 2003/131037 A1 offenbart eine Schaltung, die eine Logarithmusoperation auf ein Eingangssignal anwendet. Dabei wird das Eingangssignal derart gedämpft oder verstärkt, dass der Wert des gedämpften oder verstärkten Eingangssignals innerhalb eines vorbestimmten Wertebereichs für das Argument der Logarithmusfunktion liegt. Der Dämpfungsfaktor wird dabei gespeichert. Ein Wert für die Logarithmusfunktion des gedämpften oder verstärkten Eingangssignals wird dann anhand von gespeicherten Wertetabellen ermittelt und eine Entdämpfung des ausgegebenen Wertes mittels des gespeicherten Dämpfungsfaktors vorgenommen.

Die Druckschrift WO 00/72188 A offenbart eine Vorrichtung und ein Verfahren zur Hochgeschwindigkeitsskalierung eines Wertes N auf einen Wert M. Dabei wird ein Schätzwert von M durch eine Rechtsschiebeoperation einer Anzahl von Bits der dem Wert N am nächsten gelegenen Zweierpotenz ermittelt. Danach wird ein binärer Suchprozess durchgeführt, der die Abweichung des Schätzwertes von M und dem tatsächlichen Wert von M bestimmt.

Der Erfindung liegt die Aufgabe zugrunde, ein Verfahren zur Berechnung einer Größe, welche von dem Ergebnis der Berechnung einer Multiplikation oder einer Division abhängt, in einer elektronischen Schaltung anzugeben, welches eine aufwandsgünstigere Durchführung der Operationen ermöglicht. Insbesondere soll ein geringerer Stromverbrauch und eine Hardware-Ersparnis ermöglicht werden. Ferner liegt der Erfindung die Aufgabe zugrunde, eine Vorrichtung zur Berechnung einer Größe, welche von dem Ergebnis der Berechnung einer Multiplikation oder einer Division abhängt, in einer elektronischen Schaltung, insbesondere einer Schaltung zum Durchführen einer SINR-Schätzung, mit den oben genannten Vorteilen zu schaffen.

Die der Erfindung zugrunde liegende Aufgabenstellung wird durch die Merkmale der unabhängigen Ansprüche gelöst. Vorteilhafte Ausführungsbeispiele und Weiterbildungen der Erfindung sind in den Unteransprüchen angegeben.

Bei dem erfindungsgemäßen Verfahren wird eine Größe, welche von dem Ergebnis einer Multiplikation $X \cdot K$ bzw. einer Division $X \cdot 1/K$ abhängt, in einer elektronischen Schaltung berechnet, welche einen Software-Schaltungsbereich und einen Hardware-Schaltungsbereich umfasst. X und K sind reelle Zahlen in einer Zahlendarstellung zur Basis p. Bei dem erfindungsgemäßen Verfahren wird zunächst in dem Software-Schaltungsbereich aus dem Wert K eine Stellenverschiebung sv berechnet, derart, dass $p^{sv}$ ein Näherungswert für K ist. Anschließend wird in dem Hardware-Schaltungsbereich der Wert X bei einer Multiplikation um sv Stellen nach links bzw. bei einer Division um sv Stellen nach rechts verschoben. In dem Software-Schaltungsbereich wird ein geeigneter Korrekturfaktor Kf berechnet. Der verschobene Wert von X wird in einem Hardware-Block weiterverarbeitet und es wird ein aus dem verschobenen Wert von X abgeleiteter Wert ausgegeben. Der aus dem verschobenen Wert von X abgeleitete Wert wird mit dem Korrekturfaktor Kf multipliziert, um die Größe zu erhalten, die der Anwendung des Hardware-Blocks auf X*K bzw. X*1/K entspricht.

Dadurch, dass anstelle einer Multiplikation des Wertes X mit dem Wert K bzw. 1/K eine Stellenverschiebung des Wertes X durchgeführt wird, entfällt im Hardware-Schaltungsbereich die aufwändige Multiplikations-Operation. Die stattdessen auftretende Verschiebung des Wertes X kann im Hardware-Schaltungsbereich wesentlich effizienter (geringerer Flächen- und Leistungsbedarf) durchgeführt werden. Die im Vergleich zum Stand der Technik hinzukommende Multiplikation des verschobenen Wertes von X mit einem geeigneten Korrekturfaktor Kf bedeutet einen Zusatzaufwand, der jedoch im Vergleich zu der gegenüber dem Stand der Technik erreichten Ersparnis gering ist.

Die Anzahl der möglichen Werte für sv ist wesentlich geringer als die Anzahl der möglichen Werte für K. Dies bedeutet, dass der Wert sv in der Regel eine geringere Dynamik (Änderungsfrequenz) aufweist als der Wert K. Dies hat zur Folge, dass die Update-Rate der Stellenverschiebe-Operation in der Regel wesentlich geringer ist als die Update-Rate der Multiplikations-Operation im Stand der Technik. Dies führt zu einer reduzierten Buslast (geringerer Stromverbrauch) bei dem Transfer des Wertes sv vom Software-Schaltungsbereich in den Hardware-Schaltungsbereich im Vergleich zum Stand der Technik (siehe Fig. 1).

Da die Stellenverschiebung sv logarithmisch (Basis p) zu K skaliert und nur ganze Zahlen annehmen kann, ist die benötigte Wortbreite zur Darstellung der Stellenverschiebung sv (d.h. zur Steuerung der Stellenverschiebe-Operation) deutlich geringer als die Wortbreite des Wertes K bzw. 1/K zur Darstellung der Multiplikation im Stand der Technik (siehe Fig. 1). Dies vermindert ebenfalls die Buslast für den Transfer des Wertes sv von dem Software-Schaltungsbereich in den Hardware-Schaltungsbereich, denn es kann im Vergleich zum Stand der Technik (Fig. 1) ein Bus mit deutlich reduzierter Wortbreite eingesetzt werden.

Eine besonders vorteilhafte Ausführungsform der Erfindung kennzeichnet sich dadurch, dass der Wert $sv = \mathrm{round}(\log_p K)$ ist, wobei $\mathrm{round}(\cdot)$ die Rundungsoperation (Rundung des Argumentes auf die nächstliegende ganze Zahl) ist. Diese Vorschrift stellt eine besonders vorteilhafte Möglichkeit dar, eine Stellenverschiebung sv zu ermitteln. Der durch die Stellenverschiebung bestimmte Näherungswert K' für die Multiplikation beträgt in diesem Fall $K' = p^{\mathrm{round}(\log p K)}$.

Der Korrekturfaktor Kf sollte so gewählt werden, dass die nachfolgenden Hardware-Blöcke keine Anpassung an die erfindungsgemäße Durchführung der Multiplikations- oder Divisions-Operation erfahren müssen. Sofern ein lineares Verhalten der nachfolgenden Hardware-Blöcke vorausgesetzt werden kann, kennzeichnet sich eine vorteilhafte Ausführungsform der Erfindung dadurch, dass der Korrekturfaktor Kf bei einer Division den Wert $(p^{sv})/K$ oder bei einer Multiplikation den Wert $K/p^{sv}$ aufweist. Zeigen die nachfolgenden Hardware-Schaltungsblöcke ein nicht-lineares Verhalten, kann der Korrekturfaktor Kf entsprechend geändert werden.

Eine weitere vorteilhafte Ausgestaltung der Erfindung kennzeichnet sich dadurch, dass der verschobene Wert X gesättigt wird, sofern dieser einen vordefinierten Zahlenwert erreicht hat. Dadurch werden Signal-Überläufe verhindert und geringstwertigste Bits (LSBs: least significant bits), die von der Genauigkeit her nicht erforderlich sind, durch Quantisieren unterdrückt.

Eine erfindungsgemäße elektronische Schaltung zur Berechnung einer Größe, welche von dem Ergebnis der Berechnung einer Multiplikation X.K oder einer Division X-1/K abhängt, weist ein erstes Berechnungsmittel im Software-Schaltungsbereich zum Berechnen einer Stellenverschiebung sv auf, derart, dass $p^{sv}$ ein Näherungswert für K ist. Ferner umfasst die elektronische Schaltung einen im Hardware-Schaltungsbereich der elektronische Schaltung enthaltenen steuerbaren Stellenverschieber (Barrel-Shifter) zum Verschieben des Wertes X bei einer Multiplikation um sv Stellen nach links bzw. bei einer Division um sv Stellen nach rechts sowie einen in dem Hardware-Bereich enthaltenen Hardware-Block zur Weiterverarbeitung des verschobenen Wertes von X und Ausgabe eines aus dem verschobene Wert von X abgeleiteten Wertes. Der Software-Schaltungsbereich umfasst ferner zweite Berechnungsmittel zum Berechnen eines geeigneten Korrekturfaktors KF und Mittel zum Multiplizieren des aus dem verschobenen Wert von X abgeleiteten Wertes mit dem Korrekturfaktor Kf, um die Größe zu erhalten, die der Anwendung des Hardware-Blocks auf X*K bzw. X*1/K entspricht.

Durch die in dieser Weise realisierte erfindungsgemäße elektronische Schaltung werden die bereits im Zusammenhang mit dem Anspruch 1 erläuterten Vorteile erreicht.

Die Erfindung wird nachfolgend anhand von Ausführungsbeispielen unter Bezugnahme auf die Zeichnungen näher erläutert; in diesen zeigt:

Fig. 1     eine konventionelle Realisierung einer Schaltung zur Durchführung einer Divisions-Operation;

Fig. 2     ein Ausführungsbeispiel der Erfindung für die Realisierung einer erfindungsgemäßen Schaltung zur Durchführung einer Divisions-Operation; und

Fig. 3     ein Ausführungsbeispiel einer Schaltung zur Durchführung einer Signal-zu-Interferenz-und-Rausch-Schätzung, welche eine mehrfache Verwendung einer erfindungsgemäßen Schaltung vorsieht.

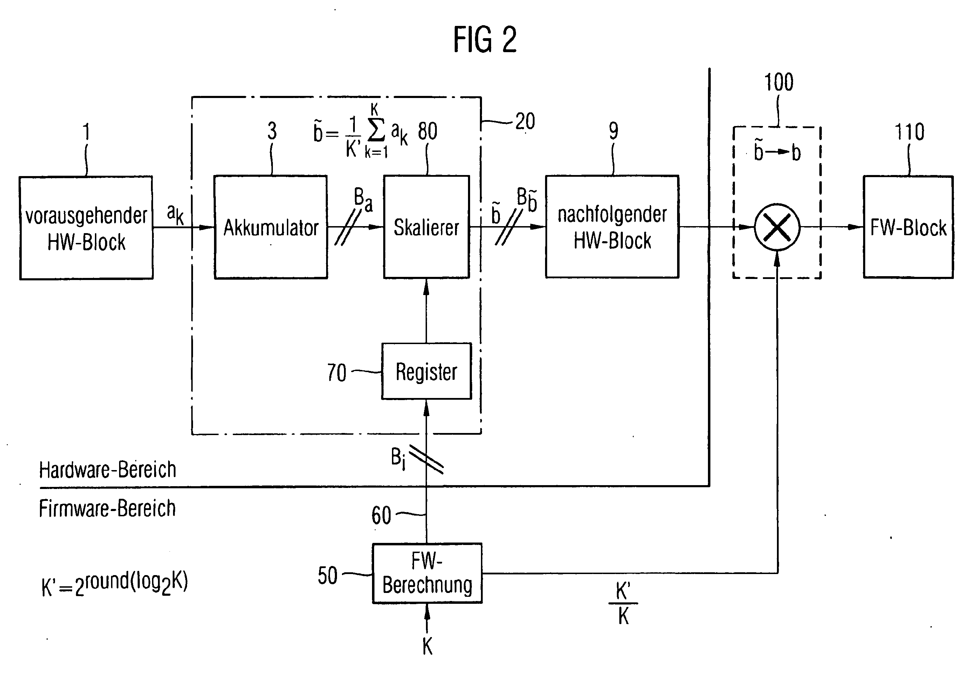

Fig. 2 zeigt ein Ausführungsbeispiel einer erfindungsgemäßen Schaltung zur Durchführung einer Division durch K (bzw. einer Multiplikation mit dem Faktor 1/K). Gleiche oder ähnliche Schaltungselemente wie in Fig. 1 werden mit denselben Bezugszeichen bezeichnet. Eine dem vorausgehenden Hardware-Block 1 nachgeschaltete Hardware-Schaltung zur näherungsweisen Mittelwertbildung 20 weist den Akkumulator 3, einen steuerbaren Skalierer bzw. Barrel-Shifter 80 sowie ein Register 70 auf. Der Ausgang des Akkumulators 3 weist eine Wortbreite $B_a$ auf und ist mit dem Dateneingang des Skalierers 80 verbunden. Der Steuereingang des Skalierers 80 steht mit dem Ausgang des Registers 70 in Verbindung. Der Ausgang des Skalierers 80 verläßt die Hardware-Schaltung 20 und wird einem nachfolgenden Hardware-Block 9 zugeführt, der identisch mit dem Hardware-Block 9 in der Fig. 1 sein kann.

Der Firmware-Bereich umfasst einen Firmware-Berechnungsblock 50 zur Berechnung einer Stellenverschiebung sv. Die Stellenverschiebung sv wird über einen Bus 60 dem Hardware-Bereich übermittelt und in dem Register 70 gespeichert. Der Firmware-Berechnungsblock 50 ermittelt ferner einen Korrekturfaktor $2^{sv}/K$ in der Form $2^{round(\log_2 K)}/K$. Dieser wird einem Firmware-Korrekturblock 100 übermittelt, welcher die Ausgabedaten des Hardware-Blocks 9 prozessiert. Der auf diese Weise korrigierte Datenstrom wird in einem Firmware-Block 110 weiterverarbeitet.

Die Funktionsweise der erfindungsgemäßen Schaltung ist wie folgt:

Der einlaufende Datenstrom $a_k$ weist eine bekannte, gegebenenfalls variable Datenrate auf. Es soll eine Akkumulation über K Datenwerte und eine entsprechende Normierung mit dem Normierungsfaktor 1/K durchgeführt werden, d.h. der Wert $b = \dfrac{1}{K} \displaystyle\sum_{k=1}^{K} a_k$ berechnet werden. Der Wert K ist variabel und kann über einen großen Wertebereich variieren.

Der im Firmware-Bereich bekannte Wert K wird (in nicht dargestellter Weise) dem Akkumulator 3 mitgeteilt und dem Firmware-Berechnungsblock 50 zur Verfügung gestellt. Der Akkumulator 3 berechnet die Summe $\displaystyle\sum_{k=1}^{K} a_k$.

Der Firmware-Berechnungs-block 50 ermittelt sv, z.B. sv = round $(\log_2 K)$, aus dem Wert K. Der Wert sv weist eine Wortbreite (Bitbreite) $B_i$ auf und wird über einen Bus 60 in das Register 70 im Hardware-Bereich geschrieben.

Die Summe $\sum_{k=1}^{K} a_k$ weist die Wortbreite $B_a$ auf. Die Stellenver-schiebung sv wird von dem parametrierbaren Skalierer 80 zur Auswahl der Bits bei der auf die Summe $\sum_{k=1}^{K} a_k$ angewandten Schiebeoperation verwendet. Der durch die Schiebeoperation erzeugte approximierte Wert $\tilde{b} = \frac{1}{2^{sv}} \sum_{k=1}^{K} a_k$ ' weist die Wortbreite $B_{\tilde{b}}$ auf. Da $2^{SV}/$ K<2 gilt, ist die Wortbreite $B_{\tilde{b}}$ identisch mit der Wortbreite $B_b$ des richtigen Werts b, d.h. $B_{\tilde{b}} = B_b$.

Mit anderen Worten wird die Summe $\sum_{k=1}^{K} a_k$ in der Hardware-Schaltung 20 nicht mit dem Korrekturfaktor 1/K selbst, sondern mit einem Näherungswert $1/2^{sv}$ multipliziert.

Der hierdurch eingefügte Fehler wird durch den in dem Firmware-Berechnungsblock 50 ermittelten Korrekturfaktor Kf kompensiert.

Sofern der Hardware-Block 9 ein lineares Verhalten zeigt, ist der Korrekturfaktor Kf = $2^{sv}$/K. Für sv = round $(\log_2 K)$ ergibt sich Kf = $2^{round(\log_p K)}$/K. Die Kompensations-Multiplikation in dem Firmware-Korrekturblock 100 bewirkt, dass die nachfolgende Datenverarbeitung (Firmware-Block 110) mit dem exakten Wert b weiterarbeiten kann.

Die Kompensations-Multiplikation mit dem Korrekturfaktor Kf = $2^{sv}$/K setzt also ein lineares Verhalten des nachfolgenden Hardware-Blocks 9 voraus. Ist das Verhalten des nachfolgenden Hardware-Blocks 9 nicht linear, muss eine entsprechend angepasste Kompensations-Multiplikation erfolgen. In allen Fällen sind die im Signalweg hinter dem Firmware-Korrekturblock 100 liegenden Datenverarbeitungsblöcke (Firmware-Block 110 und/oder nicht dargestellte Hardware-Blöcke) nicht von dieser Änderung betroffen. Wie bereits erwähnt ist auch der Hardware-Block 9 identisch mit dem im Stand der Technik verwendeten Hardware-Block 9.

Die erfindungsgemäße Lösung weist die folgenden Vorteile auf:

- Die benötigte Wortbreite zur Darstellung der Schiebeoperation $B_i$ ist üblicherweise deutlich kleiner als die Wortbreite des Faktors selbst, d.h. $B_i << B_k$.
- Die Update-Rate der Schiebeoperation kann kleiner ausfallen als die des Multiplikators (Normierungsfaktor 1/K) im Stand der Technik, da der gerundete Wert $2^{round(\log_2 K)}$ von K eine geringere Dynamik aufweist als K. Dieser und der vorherige Punkt führen zu einer reduzierten Buslast am Bus 60 (verglichen mit dem Bus 6).
- Der im Stand der Technik erforderliche Multiplizierer 4 fällt weg, der Skalierer 80 wird etwas komplizierter als der Skalierer 8 im Stand der Technik. Hieraus resultiert eine deutlich weniger aufwändige Hardware.

Als ein geringfügiger Nachteil der erfindungsgemäßen Lösung kann die notwendige Firmware-Abbildung des Wertes K auf die Schiebeoperation (Stellenverschiebung sv) und den Korrekturfaktor Kf gesehen werden. Der Aufwand hierfür ist allerdings vergleichbar mit der in Fig. 1 durchzuführenden Abbildung (Invertierung) von K auf 1/K.

Darüber hinaus ist festzustellen, dass das erfindungsgemäße Konzept besonders effizient verwendet werden kann, wenn in dem Hardware-Bereich mehrere solcher Multiplikationen oder Divisionen mit denselben Faktoren (K bzw. 1/K) durchgeführt werden. Dann können sämtliche Operationen mit derselben Firmware-Korrekturmultiplikation in dem Firmware-Korrekturblock 100 korrigiert werden. Dies wird auch aus dem folgenden Ausführungsbeispiel deutlich.

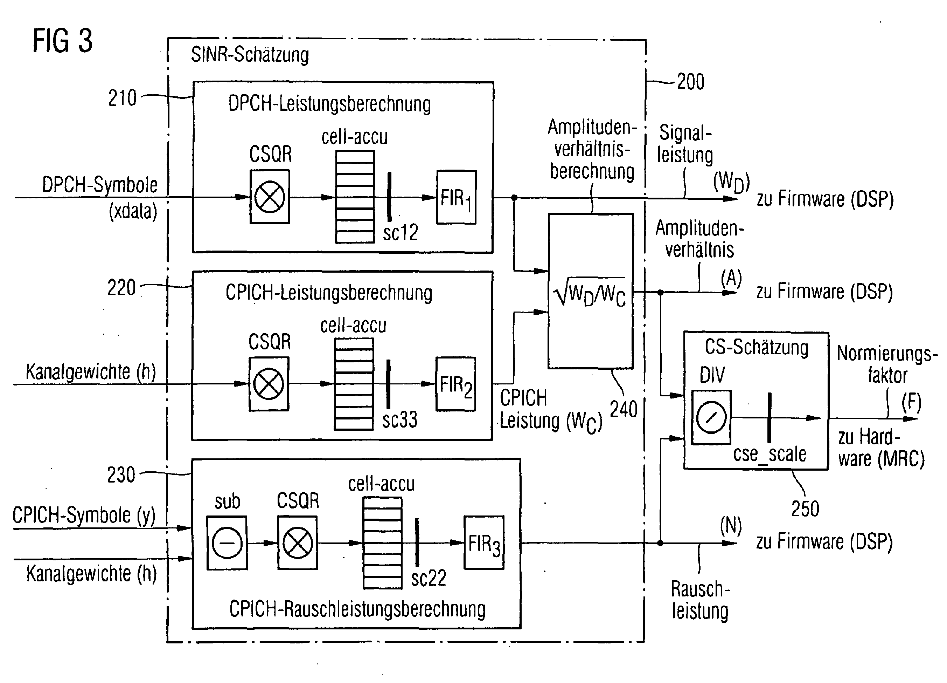

Fig. 3 zeigt in beispielhafter Weise die Anwendung der Erfindung in den Schaltungsblöcken SINR-Schätzung (Signal-to-Noise and Interference Ratio) 200 und CS-Schätzung (Channel State) 250 des MGOLD2™ Chips von der Infineon Technologies AG. Zum besseren Verständnis der für die Erfindung wesentlichen Aspekte sind die Schaltungsblöcke SINR-Schätzung 200 und CS-Schätzung 250 vereinfacht (nur für den Betriebsmodus "normal mode, databased") dargestellt.

Der Hardware-Block SINR-Schätzung 200 setzt sich aus vier Subblöcken DPCH-Leistungsberechnung 210, CPICH-Leistungsberechnung 220, CPICH-Störleistungsberechnung 230 und einer Einheit zur Berechnung des Amplitudenverhältnisses 240 zusammen. Dem Hardware-Block SINR-Schätzung 200 ist der Block 250 zur Schätzung des Kanalzustands nachgeordnet.

Die SINR-Schätzung basiert in UMTS auf den empfangenen komplexwertigen Symbolen der physikalischen Kanäle DPCH (Dedicated Physical Channel) und CPICH (Common Pilot Channel). Die Kanalstruktur von UMTS ist bekannt und z.B. in der Spezifikation 3GPP TS 25.211 V4.6.0 (2002-09) (Release 4) angegeben.

Der Ausgang des Subblocks 210 für die DPCH-Leistungsberechnung wird sowohl dem Firmware-Bereich als auch dem Subblock 240 zur Berechnung des Amplitudenverhältnisses zugeleitet. Der Ausgang des Subblocks 220 zur CPICH-Leistungsberechnung wird dem Subblock 240 zur Berechnung des Amplitudenverhältnisses zugeführt. Dessen Ausgang wird sowohl dem Firmware-Bereich als auch einem Eingang des Blocks 250 für die Kanalzustandsschätzung zugeleitet. Der Ausgang des Subblocks 230 wird dem anderen Eingang des Blocks 250 für die Kanalzustandsschätzung sowie dem Firmware-Bereich zugeführt. Der Firmware-Bereich kann beispielsweise durch einen DSP realisiert sein.

Im Folgenden werden der Aufbau und die Funktionsweise der einzelnen Subblöcke 210, 220, 230, 240 und des Blockes 250 näher erläutert:

Die Eingangssignale der Subblöcke 210, 220, 230 werden aus den entspreizten und Delay-kompensierten DPCH-Symbolen xdata, CPICH-Symbolen y und den CPICH-Kanalgewichten h gebildet. Die CPICH-Kanalgewichte h kann man sich als tiefpassgefilterte, entspreizte und Delay-kompensierte CPICH-Symbole y vorstellen. Sämtliche Eingangssignale sind komplexwertig und liegen für alle im UMTS-Empfänger parallel verarbeiteten Ausbreitungspfade (Rake-Finger) an, wobei durch die vorgelagerte Delay-Kompensierung die Zeitverschiebungen durch die pfadspezifischen Ausbreitungswege bereits kompensiert sind. Daher können die über verschiedene Ausbreitungspfade empfangenen Eingangssignalkomponenten als zeitlich synchron betrachtet werden.

Der Subblock 210 für die DPCH-Leistungsberechnung weist einen komplexen Quadrierer CSQR (complex square) sowie einen mehrkanaligen Akkumulator cell-accu auf. Am Ausgang des mehrkanaligen Akkumulators cell-accu ist ein steuerbarer Skalierer (Barrel-Shifter) sc12 vorgesehen. Dem steuerbaren Skalierer sc12 ist ein FIR-Filter $FIR_1$ nachgeschaltet.

In dem Subblock 210 zur DPCH-Leistungsberechnung wird die Signalleistung $W_D$ gemäß der folgenden Gleichung berechnet:

$$W_D(C) \;=\; FIR_1\left((1/K_x)\cdot \sum_{m=1\ldots M(C)} \sum_{k=1\ldots K_x} \left| xdata_m(k)\right|^2\right). \qquad (1)$$

Dabei bezeichnet m die Fingernummer und k den Zeitindex. C ist die Zellennummer, M(C) die Anzahl der Rake-Finger in Zelle C. $xdata_m(k)$ bezeichnet das k-te Datensymbol ($k = 1, ..., K_x$) im Zeitschlitz von Rake-Finger m. $K_x$ bezeichnet die Anzahl der Symbole eines Zeitschlitzes.

Demnach werden in dem Subblock 210 zur DPCH-Leistungsberechnung die komplexen DPCH-Datensymbole $xdata_m(k)$ in dem komplexen Quadrierer CSQR betragsmäßig quadriert. Die Betragsquadrate über alle Symbole eines Zeitschlitzes ($k = 1, ..., K_x$) und alle Rake-Finger einer Zelle ($m = 1, ..., M(C)$) werden in dem Akkumulator cell-accu aufsummiert. Für jede Zelle ergibt sich pro UMTS-Zeitschlitz ein Ergebniswert. Diese zellspezifischen Ergebniswerte werden mittels des steuerbaren Skalierers sc12 zur Normierung einer Skalierung mit dem Kehrwert der Anzahl der Symbole pro Zeitschlitz, $1/K_x$, unterzogen. $K_x$ kann sich bei einer Änderung des Spreizfaktors an den Zeitschlitzgrenzen auch ändern. Das für jede Zelle erhaltene normierte Ergebnis wird dann in dem $FIR_1$ Filter tiefpassgefiltert. $W_D(C)$ gibt die DPCH-Leistung der Zelle mit der Zellennummer C an.

Der Subblock 220 zur CPICH-Leistungsberechnung ist analog zu dem Subblock 210 aufgebaut. Der Skalierer im Subblock 220 ist mit dem Bezugszeichen sc33 bezeichnet. Statt der Datensymbole $xdata_m(k)$ werden die Kanalgewichte $h_m(k)$ verarbeitet, wobei mit $h_m(k)$ das k-te Kanalgewicht ($k = 1, ..., 10$) von dem Rake-Finger m bezeichnet wird. Pro Zeitschlitz gibt es konstant 10 Kanalgewichte. Daher erfolgt die Skalierung konstant mit einem Faktor 1/10. Die Gleichung zur Berechnung der CPICH-Leistung lautet demnach

$$W_C(C) \;=\; FIR_2\left((1/10)\cdot \sum_{m=1\ldots M(C)} \sum_{k=1\ldots 10} \left| h_m(k)\right|^2\right). \qquad (2)$$

Dabei bezeichnet $W_C(C)$ die CPICH-Signalleistung in der Zelle mit der Zellennummer C.

Der Subblock 230 für die CPICH-Rauschleistungsberechnung ist ähnlich wie die Subblöcke 210 und 220 aufgebaut. Er weist zusätzlich einen eingangsseitigen Subtrahierer sub auf. Mit $Y_m(k)$ wird das k-te CPICH-Symbol ($k = 1, ..., 10$) von dem Rake-Finger m bezeichnet. In dem Subtrahierer sub wird die Differenz $y_m(k) - h_m(k)$ gebildet. Diese Differenz kann als geschätztes Rauschsignal aus dem CPICH aufgefasst werden, weil es durch Abziehen des tiefpassgefilterten CPICH-Signals vom originalen CPICH-Signal gebildet wird. Diese geschätzten aktuellen komplexen Rauschamplituden, $y_m(k) - h_m(k)$, werden in dem komplexen Quadrier CSQR betragsmäßig quadriert, in dem Akkumulator cell-accu summiert, von dem Skalierer sc22 skaliert'und mittels des FIR-Filters $FIR_3$ gefiltert. Als Rauschleistung N(C) für die Zelle mit der Zellennummer C ergibt sich

$$N(C) = FIR_3((1/(10 \cdot M(C))) \cdot \sum_{m=1..M(C)} \sum_{k=1...10} |y_m(k) - h_m(k)|^2) \qquad (3)$$

Aus obiger Gleichung wird deutlich, dass im Unterschied zu den beiden vorangegangenen Algorithmen (Gleichungen (1) und (2)) in Gleichung (3) nicht nur durch die Anzahl der CPICH-Symbole pro Zeitschlitz, d.h. durch 10 dividiert wird, sondern dass zusätzlich durch die Anzahl der Finger der Zelle, M(C), dividiert wird. Die Anzahl M(C) kann für jede Zelle verschieden sein und kann sich von Zeitschlitz zu Zeitschlitz ändern.

Alle FIR-Filter $FIR_1$, $FIR_2$, $FIR_3$ haben ein Tiefpassverhalten mit der Verstärkung 1 bei der Frequenz 0 Hz. Damit können sie für die Betrachtung der Skalierungsfaktoren außer Acht gelassen werden. Die Koeffizienten der drei FIR-Filter $FIR_1$, $FIR_2$, $FIR_3$ können verschieden sein, was durch die unterschiedlichen Indizes 1, 2, 3 angedeutet wird.

Der Subblock 240 für die Berechnung des Amplitudenverhältnisses führt eine Division der geschätzten DPCH-Signalleistung $W_D(C)$ durch die geschätzte CPICH-Leistung $W_C(C)$ und die Berechnung der Wurzel dieses Verhältnisses durch. Die so gewonnene Größe A(C) wird als Amplitudenverhältnis (Amplitude Ratio) bezeichnet. Für jeden Zeitschlitz wird für jede Zelle (Zellennummer C) ein Wert berechnet:

$$A(C) = \sqrt{W_D(C) / W_C(C)} \qquad . \qquad (4)$$

Der Block 250 für die Kanalzustandsschätzung umfasst eine Divisionsstufe DIV sowie einen Skalierer sce_scale. Der Dividierer DIV dividiert das Amplitudenverhältnis A(C) durch die Rauschleistung N(C). Das Ergebnis der Division ist der Normierungsfaktor (Normalization Factor) F(C), der von der in Fig. 3 nicht dargestellten MRC-Hardware-Einheit (MRC: Maximum Ratio Combiner), welche den Kombinierer des Rake-Empfängers bildet, benötigt wird. Der Normierungsfaktor F(C) wird für jeden Zeitschlitz und jede Zelle nach

$$F(C) = A(C) / N(C) \qquad (5)$$

.

berechnet.

Die Ergebnisse des Hardware-Blocks 200 zur SINR-Schätzung sowie des Blocks 250 für die Kanalzustandsschätzung werden abgesehen vom MRC auch im DSP (Firmware-Bereich) zur Weiterverarbeitung benötigt. Im Firmware-Bereich wird beispielsweise die in der Hardware ermittelte Signalleistung durch die Rauschleistung dividiert und daraus der dekadische Logarithmus gebildet, woraus sich ein zellspezifischer Schätzwert für das Signal-zu-Rausch-und-Interferenz-Leistungsverhältnis SINR in Dezibel (dB) ergibt.

Es wird ferner darauf hingewiesen, dass die in den Gleichungen (1) bis (5) angegebenen Signalverarbeitungs-Algorithmen exemplarisch sind, da sie nur für einen bestimmten Betriebsmodus (normal mode, data based) gelten und in anderen Betriebsmodi unterschiedlich sein können.

Aus dem Vorhergehenden wird deutlich, dass die Aufgabe der in Fig. 3 dargestellten Hardware-Blöcke die Vorverarbeitung der Eingangssignale durch relativ einfache mathematische Operationen, die aber zu einer erheblichen Datenreduktion führen, ist. Dadurch wird erreicht, dass für die Weiterverarbeitung der Ergebnisdaten im DSP nur wenige, dafür aber komplexere mathematische Operationen ausgeführt werden müssen. Diese können leicht in Firmware programmiert werden.

Gemäß der Erfindung wurde erkannt, dass es ineffizient wäre, die "idealen" Algorithmen nach den Gleichungen (1) bis (5) direkt in Hardware umzusetzen, weil für die Skalierungsoperationen Divisionen durch Zahlen benötigt werden, die keine Zweierpotenzen darstellen. Divisionen durch 10 oder durch eine variable Anzahl von Symbolen oder Rake-Fingern, wie sie in den Gleichungen (1) bis (5) vorkommen, sind in Firmware wesentlich leichter durchzuführen als in Hardware. Daher werden in der Hardware nur Divisionen durch Zweierpotenzen, d.h. Schieberegisteroperationen, durchgeführt. Divisionen durch beliebige positive ganze Zahlen, Z, werden durch Divisionen durch die "nächstgelegene" Zweierpotenz $2^{round(log_2(Z))}$ ersetzt. Statt durch 10 zu dividieren, wird also um drei Bits nach rechts geschoben, was einer Division durch 8 entspricht. Die Ergebnisse $W_D(C)$, A(C), N(C) werden fehlerbehaftet an den DSP (Firmware-Bereich) weitergeleitet. Der Approximationsfehler wird in der Firmware (durch den DSP) korrigiert, wo Divisionen durch beliebige Zahlen viel einfacher als in Hardware durchführbar sind. Der Korrekturfaktor, mit dem in der Firmware die Ergebnisse aus der Hardware multipliziert werden müssen, lautet $2^{round(log_2(Z))}/Z$, ist also gleich dem Quotienten aus approximiertem und tatsächlichem Nennerausdruck.

Insofern sind die Skalierer sc12, sc22, sc33 im Wesentlichen Barrel-Shifter, also Hardware-Einheiten, die eine programmierbare Anzahl von Bits nach rechts (oder links) schieben können und so die Skalierungsfaktoren in den Gleichungen (1) bis (3) approximieren. Die Anzahl der Bits, um die geschoben werden muss, entspricht der in Fig. 2 dargestellten Größe sv (Stellenverschiebung).

Neben den Schiebeoperationen dienen die Skalierer sc12, sc22, sc33 auch dazu, das Signal bei Erreichen definierter Schwellwerte zu sättigen (Saturation), um Signal-Überläufe zu verhindern und um von der Genauigkeit her nicht erforderliche LSBs durch Quantisieren zu unterdrücken.

Im Gegensatz zu den Skalierern sc12, sc22, sc33 ist der Skalierer cse_scale in dem Block 250 für die Kanalzustandsschätzung in konventioneller Weise, d.h. als Hardware-Multiplizierer gemäß Fig. 1, ausgeführt. Der Grund hierfür besteht darin, dass der Normierungsfaktor F(C) direkt in der Hardware benötigt wird und eine Division in Firmware hier zu viel Zeit benötigen würde (Schleife Hardware-Firmware-Hardware). Daher wird in der Firmware der Korrekturfaktor berechnet, der sich aus dem Produkt aller Approximationsfehler der Skalierungsfaktoren in den Skalierern sc12, sc22, sc33 ergibt. Dieser Wert ist im Allgemeinen keine Zweierpotenz. Deshalb ist beim Skalierer cse_scale ein Hardware-Multiplizierer erforderlich, um das von dem Dividierer DIV ausgegebene Datensignal mit einem vom DSP berechneten und in ein Register (nicht dargestellt) programmierten Skalierungsfaktor zu multiplizieren.

Sowohl bei der Schaltung in Fig. 2 als auch bei der Schaltung in Fig. 3 wird der Korrekturfaktor Kf also in Firmware berechnet. Der Unterschied zwischen den beiden Schaltungsanordnungen besteht darin, dass in Fig. 2 der Korrekturblock 100 in Firmware ausgeführt ist, während in Fig. 3 für eine der berechneten Größen, F(C), der Korrekturblock durch den Skalierer cse_scale repräsentiert wird, d.h. in Hardware realisiert ist.

Zum besseren Verständnis der Erfindung wird diese an einem einfachen Zahlenbeispiel verdeutlicht: Es wird das DPCH-Zeitschlitzformat (slot format) 15 angenommen. Laut dem eingangs angegebenen UMTS-Standard 3GPP TS 25.211 (2002-09) gibt es in diesem Fall $K_x = 304$ Datensymbole im Zeitschlitz. Es wird eine Zelle mit 7 Rake-Fingern zu demodulierenden Ausbreitungspfaden zugrunde gelegt, d.h. M(C) = 7. Um den Skalierer sc12 zu programmieren, berechnet man die nächstliegende Zweierpotenz zu 304, also $2^{round(log_2(304))} = 2^{round(8,2479...)} = 2^8 = 256$. Daher wird im Skalierer sc12 mit dem Fakter 1/256 multipliziert. Zur Ansteuerung des Skalierers sc12 wird lediglich die Anzahl der Bit-Verschiebungen, also die Zahl 8, in das Skalierungsparameterregister (entspricht dem Register 70 in Fig. 2) programmiert. Dies erfordert im Vergleich zu der Zahl 256 eine deutlich kleinere Bitbreite für die Zahlendarstellung, d.h. $Bi << B_k$ in Fig. 2.

Der Approximationsfehler in dem Subblock 210 für die DPCH-Leistungsberechnung ist folglich ein Faktor 304/256, d.h. die Ergebnisse sind um diesen Faktor zu groß.

Der Approximationsfehler in dem Subblock 220 für die CPICH-Leistungsberechnung ist ein Faktor 10/8, da in dem Skalierer sc33 statt durch 10 nur durch 8 dividiert wird.

Der Approximationsfehler in dem Subblock 230 für die CPICH-Rauschleistungsberechnung mit dem Skalierer sc22 ergibt einen Faktor 70/64 (da 10·M(C) = 10.7 = 70 durch 64 ersetzt wird). Daraus ergeben sich die folgenden Korrekturfaktoren:

Korrekturfaktor für die Signalleistung (Subblock 210):
$Kf_1 = 256/304 = 0{,}84210...$

Korrekturfaktor für die Rauschleistung (Subblock 230):
$Kf_2 = 64/70 = 0{,}91428...$

Korrekturfaktor für das Amplitudenverhältnis (Subblock 240):
$Kf_3 = sqrt(256/304)/(8/10)) = 1{,}02597...$

Daher ist für die Berechnung des Normierungsfaktors in dem Block 250 ein Korrekturfaktor
$Kf_4 = sqrt((256/304)/(8/10))/(64/70) = 1{,}12216...$ zu verwenden.

Die Multiplikationen mit den ersten drei Korrekturfaktoren $Kf_1$, $Kf_2$, $Kf_3$ bezüglich der Ausgabegrößen $W_D(C)$, N(C), A(C) werden rein in Firmware durchgeführt (mittels des DSPs, der dem Software-Korrekturblock 100 in Fig. 2 entspricht), die Multiplikation mit dem letzten Korrekturfaktor $Kf_4$ erfolgt, wie bereits erwähnt, in Hardware durch den Skalierer cse_scale. Der Korrekturfaktor $Kf_4$ als solcher wird aber in Firmware berechnet und über ein Register (nicht dargestellt) in dem Hardware-Block 250 als Parameter programmiert.

**Patentansprüche**

**1.**   Verfahren zur Berechnung einer Größe, welche von dem Ergebnis der Berechnung einer Multiplikation X·K oder einer Division X·1/K abhängt, in einer elektronischen Schaltung, welche einen Software-Bereich und einen Hardware-Bereich umfasst, wobei X und K reelle Zahlen in einer Zahlendarstellung zur Basis p, insbesondere p = 2, sind, mit den Schritten:

- Berechnen einer Stellenverschiebung sv in dem Software-Bereich (50), derart, dass $p^{sv}$ ein Näherungswert für K ist;
- Verschieben des Wertes X bei einer Multiplikation um sv Stellen nach links bzw. bei einer Division um sv Stellen nach rechts in dem Hardware-Bereich (80);
- Weiterverarbeitung des verschobenen Wertes von X in einem Hardware-Block (9) und Ausgabe eines aus dem verschobenen Wert von X abgeleiteten Wertes;
- Berechnen eines geeigneten Korrekturfaktors Kf in dem Software-Bereich (50) der elektronischen Schaltung in Abhängigkeit von K und $p^{sv}$; und
- Multiplizieren in dem Software-Bereich (100) des aus dem verschobenen Wert von X abgeleiteten Wertes mit dem Korrekturfaktor Kf, um die Größe zu erhalten, die der Anwendung des Hardware-Blocks (9) auf X*K bzw. X*1/K entspricht.

2. Verfahren nach Anspruch 1,
**dadurch gekennzeichnet, dass** die Stellenverschiebung sv = round($\log_p$ K) ist, wobei round($\cdot$) die Rundung des Arguments auf die nächstliegende ganze Zahl ist.

3. Verfahren nach Anspruch 1 oder 2,
**dadurch gekennzeichnet, dass** der Korrekturfaktor Kf bei einer Division den Wert ($p^{sv}$)/K oder bei einer Multiplikation den Wert K/$p^{sv}$ aufweist.

4. Verfahren nach einem der vorhergehenden Ansprüche,
**dadurch gekennzeichnet, dass** der Wert X sich bei wiederholter Durchführung des Verfahrens wesentlich schneller ändert als der Wert K.

5. Verfahren nach einem der vorhergehenden Ansprüche,
**dadurch gekennzeichnet, dass** das Multiplizieren des aus dem verschobenen Wert von X abgeleiteten Wertes mit dem Korrekturfaktor Kf im Software-Bereich (100) erfolgt.

6. Verfahren nach einem der vorhergehenden Ansprüche,
**gekennzeichnet durch** den weiteren Schritt: Sättigen des verschobenen Wertes von X, sofern dieser einen vordefinierten Zahlenwert erreicht hat.

7. Verfahren nach einem der vorhergehenden Ansprüche,
**dadurch gekennzeichnet, dass** das Verschieben des Wertes X mittels eines Barrel-Shifter (80) durchgeführt wird.

8. Verfahren nach einem der vorhergehenden Ansprüche,
**dadurch gekennzeichnet, dass** das Verfahren zur Berechnung der Leistung eines Signals in einem Mobilfunknetz, insbesondere des über den DPCH-Kanal übertragenen Signals und/oder des über den CPICH-Kanal übertragenen Signals in UMTS, vorgesehen ist.

9. Elektronische Schaltung zur Berechnung einer Größe, welche von dem Ergebnis der Berechnung einer Multiplikation X·K oder einer Division X·1/K abhängt, wobei die Schaltung einen Software-Bereich und einen Hardware-Bereich umfasst, wobei X und K reelle Zahlen in einer Zahlendarstellung zur Basis p, insbesondere p = 2, sind, mit

- ersten Berechnungsmitteln (50) des Software-Bereichs zum Berechnen einer Stellenverschiebung sv in dem Software-Bereich, derart, dass $p^{sv}$ ein Näherungswert für K ist,
- einem in dem Hardware-Bereich enthaltenen steuerbaren Stellenverschieber (80) zum Verschieben des Wertes X bei einer Multiplikation um sv Stellen nach links bzw. bei einer Division um sv Stellen nach rechts,
- einem in dem Hardware-Bereich enthaltenen Hardware-Block (9) zur Weiterverarbeitung des verschobenen Wertes von X und Ausgabe eines aus dem verschobenen Wert von X abgeleiteten Wertes,
- zweiten Berechnungsmitteln (50) des Software-Bereichs zum Berechnen eines geeigneten Korrekturfaktors Kf in Abhängigkeit von K und $p^{sv}$, und
- Mitteln in dem Software-Bereich (100) zum Multiplizieren des aus dem verschobenen Wert von X abgeleiteten Wertes mit dem Korrekturfaktor Kf, um die Größe zu erhalten, die der Anwendung des Hardware-Blocks (9) auf X*K bzw. X*1/K entspricht.

10. Elektronische Schaltung nach Anspruch 9,
    **dadurch gekennzeichnet, dass** der Wert sv = round($\log_p$ K) ist, wobei round(·) die Rundung des Arguments auf die nächstliegende ganze Zahl ist.

11. Elektronische Schaltung nach Anspruch 9 oder 10,
    **dadurch gekennzeichnet, dass** der Korrekturfaktor Kf bei einer Division den Wert ($p^{sv}$)/K oder bei einer Multiplikation den Wert K/$p^{sv}$ aufweist.

12. Elektronische Schaltung nach einem der Ansprüche 9 bis 11,
    **dadurch gekennzeichnet, dass** der Wert X sich bei der Durchführung einer Vielzahl von Berechnungen einer Größe, welche von dem Ergebnis der Berechnung der Multiplikation X·K oder der Division X·1/K abhängt, wesentlich schneller ändert als der Wert K.

13. Elektronische Schaltung nach einem der Ansprüche 9 bis 12,
    **dadurch gekennzeichnet, dass** die Mittel (100) zum Multiplizieren des aus dem verschobenen Wert von X abgeleiteten Wertes mit dem Korrekturfaktor Kf im Software-Bereich realisiert sind.

14. Elektronische Schaltung nach einem der Ansprüche 9 bis 13,
    **gekennzeichnet durch**
    eine Sättigungsstufe zum Sättigen des verschobenen Wertes von X.

15. Elektronische Schaltung nach einem der Ansprüche 9 bis 14,
    **dadurch gekennzeichnet, dass** der steuerbare Stellenverschieber ein Barrel-Shifter (80) ist.

16. Elektronische Schaltung nach einem der Ansprüche 9 bis 15,
    **dadurch gekennzeichnet, dass** die Schaltung zur Berechnung der Leistung eines Signals in einem Mobilfunknetz, insbesondere des über den DPCH-Kanal übertragenen Signals und/oder des über den CPICH-Kanal übertragenen Signals in UMTS, ausgelegt ist.

17. Elektronische Schaltung zur Durchführung einer SINR-Schätzung in einem UMTS-Kommunikationssystem, mit einer Schaltung gemäß Anspruch 16, wobei der Hardware-Bereich

    - einen ersten Hardware-Block (210) zur Durchführung einer DPCH-Leistungsberechnung,
    - einen zweiten Hardware-Block (220) zur Durchführung einer CPICH-Leistungsberechnung, und
    - einen dritten Hardware-Block (230) zur Durchführung einer Rauschleistungsberechnung umfasst,

    und wobei der Software-Bereich

    - einen Prozessor (DSP) zur Weiterverarbeitung von Daten basierend auf den in den Hardware-Blöcken (210, 220, 230) berechneten Größen umfasst.

**Claims**

1. Method for calculating a variable, which depends on the result of the calculation of a multiplication operation X·K or a division operation X·1/K, in an electronic circuit which comprises a software area and a hardware area, where X and K are real numbers in a numerical representation to the base p, particularly p = 2, having the following steps:

    - a digit shift sv is calculated in the software area (50) such that $p^{sv}$ is an approximate value for K;
    - the value X is shifted sv digits to the left in the case of multiplication or sv digits to the right in the case of division in the hardware area (80) ;
    - the shifted value of X is processed further in a hardware block (9) and a value derived from the shifted value of X is output;
    - a suitable correction factor Kf is calculated in the software area (50) of the electronic circuit on the basis of K and $p^{sv}$;
    and

- the value derived from the shifted value of X is multiplied in the software area (100) by the correction factor Kf in order to obtain the variable which corresponds to the application of the hardware block (9) to X·K or X·1/K.

2. Method according to Claim 1,
   **characterized in that**
   the digit shift sv = round($\log_p$ K), rotund(·) being the rounding of the argument to the nearest integer.

3. Method according to Claim 1 or 2,
   **characterized in that**
   the correction factor Kf has the value ($p^{sv}$) /K in the case of division or the value K/$p^{sv}$ in the case of multiplication.

4. Method according to one of the preceding claims,
   **characterized in that**
   the value X changes much more quickly than the value K when performance of the method is repeated.

5. Method according to one of the preceding claims,
   **characterized in that**
   the value derived from the shifted value of X is multiplied by the correction factor Kf in the software area (100).

6. Method according to one of the preceding claims,
   **characterized by** the following further step:

   the shifted value of X is saturated if it has reached a predefined numerical value.

7. Method according to one of the preceding claims,

   **characterized in that**
   the value X is shifted using a barrel shifter (80).

8. Method according to one of the preceding claims,
   **characterized in that**
   the method is provided for calculating the power of a signal in a mobile radio network, particularly of the signal transmitted via the DPCH channel and/or of the signal transmitted via the CPICH channel in UMTS.

9. Electronic circuit for calculating a variable, which depends on the result of the calculation of a multiplication operation X·K or a division operation X·1/K, where the circuit comprises a software area and a hardware area, where X and K are real numbers in a numerical representation to the base p, particularly p = 2, having:

   - first calculation means (50) in the software area for calculating a digit shift sv in the software area such that $p^{sv}$ is an approximate value for K,
   - a controllable digit shifter (80), contained in the hardware area, for shifting the value X through sv digits to the left in the case of multiplication or sv digits to the right in the case of division,
   - a hardware block (9) contained in the hardware area for the further processing of the shifted value of X and output of a value derived from the shifted value of X,
   - second calculation means (50) in the software area for calculating a suitable correction factor Kf on the basis of K and $p^{sv}$, and
   - means in the software area (100) for multiplying the value derived from the shifted value of X by the correction factor Kf in order to obtain the variable which corresponds to the application of the hardware block (9) to X·K or X·1/K.

10. Electronic circuit according to Claim 9,
    **characterized in that**
    the value sv = round ($\log_p$ K), round(·) being the rounding of the argument to the nearest integer.

11. Electronic circuit according to Claim 9 or 10,
    **characterized in that**
    the correction factor Kf has the value ($p^{sv}$)/K in the case of division or the value K/$p^{sv}$ in the case of multiplication.

**12.** Electronic circuit according to one of Claims 9 to 11,
**characterized in that**
the value X changes much more quickly than the value K when a plurality of calculations of a variable, which depends on the result of the calculation of the multiplication X·K or the division X·1/K, are performed.

**13.** Electronic circuit according to one of Claims 9 to 12,
**characterized in that**
the means (100) for multiplying the value derived from the shifted value of X by the correction factor Kf are implemented in the software area.

**14.** Electronic circuit according to one of Claims 9 to 13,
**characterized by**
a saturation stage for saturating the shifted value of X.

**15.** Electronic circuit according to one of Claims 9 to 14,
**characterized in that**
the controllable digit shifter is a barrel shifter (80).

**16.** Electronic circuit according to one of Claims 9 to 15,
**characterized in that**
the circuit is designed to calculate the power of a signal in a mobile radio network, particularly of the signal transmitted via the DPCH channel and/or of the signal transmitted via the CPICH channel in UMTS.

**17.** Electronic circuit for performing SINR estimation in a UMTS communication system, having a circuit according to Claim 16, where the hardware area comprises

- a first hardware block (210) for performing DPCH power calculation,
- a second hardware block (220) for performing CPICH power calculation, and
- a third hardware block (230) for performing noise power calculation,

and where the software area comprises

- a processor (DSP) for further processing data on the basis of the variables calculated in the hardware blocks (210, 220, 230).

**Revendications**

**1.** Procédé de calcul d'une grandeur, qui dépend du résultat du calcul d'une multiplication X·K ou d'une division X·1/K dans un circuit électronique, qui comprend une partie de logiciel et une partie de matériel, X et K étant des nombres réels dans une figuration de nombre en base p, notamment p = 2, comprenant les stades, dans lesquels :

- on calcule un décalage sv de position dans la partie (50) de logiciel, de manière à ce que $p^{sv}$ soit une valeur approximative de K ;
- on décale la valeur X, pour une multiplication de sv positions vers la gauche ou pour une division de sv positions vers la droite dans la partie (80) de matériel ;
- on retraite la valeur décalée de X dans un bloc (9) de matériel et on sort une valeur déduite de la valeur décalée de X ;
- on calcule un facteur Kf de correction approprié dans la partie (50) de logiciel du circuit électronique en fonction de K et de $p^{sv}$ ; et
- on multiplie dans la partie (100) de logiciel la valeur déduite de la valeur décalée de X par le facteur Kf de correction pour obtenir la grandeur, qui correspond à l'application du bloc (9) de matériel sur X*K ou X*1/K.

**2.** Procédé suivant la revendication 1,
**caractérisé en ce que**
le décalage de position est sv = round ($\log_p$ K), round(·) étant l'arrondi de l'argument au nombre entier le plus proche.

**3.** Procédé suivant la revendication 1 ou 2,

**caractérisé en ce que**
le facteur Kf de correction a pour une division la valeur (p$^{sv}$)/K ou pour une multiplication la valeur K/p$^{sv}$.

4. Procédé suivant l'une des revendications précédentes,
   **caractérisé en ce que**
   la valeur X se modifie dans une exécution répétée du procédé sensiblement plus vite que la valeur K.

5. Procédé suivant l'une des revendications précédentes,
   **caractérisé en ce que**
   la multiplication par le facteur Kf de correction de la valeur déduite de la valeur décalée s'effectue dans la partie (100) de logiciel.

6. Procédé suivant l'une des revendications précédentes,
   **caractérisé par** le stade supplémentaire, dans lequel :

   on sature la valeur décalée de X jusqu'à que celle-ci ait atteint une valeur de nombre définie à l'avance.

7. Procédé suivant l'une des revendications précédentes,
   **caractérisé en ce que**
   on effectue le décalage de la valeur X au moyen d'un barrel-shifter (80).

8. Procédé suivant l'une des revendications précédentes,
   **caractérisé en ce que**
   le procédé est prévu pour le calcul de la puissance d'un signal dans un réseau de téléphonie mobile, notamment du signal transmis par le canal DPCH et/ou du signal transmis par le canal CPICH en UMTS.

9. Circuit électronique de calcul d'une grandeur, qui dépend du résultat du calcul d'une multiplication X·K ou d'une division X·1/K, le circuit comprenant une partie de logiciel et une partie de matériel, X et K étant des nombres réels dans une figuration de nombre en base p, notamment p = 2, comprenant

   - des premiers moyens (50) de calcul de la partie de logiciel, pour calculer un décalage sv de position dans la partie de logiciel de manière à ce que p$^{sv}$ soit une valeur d'approximation de K,
   - un décaleur (80) de position pouvant être commandé et contenu dans la partie de matériel, pour décaler la valeur X lors d'une multiplication de sv positions vers la gauche ou lors d'une division de sv positions vers la droite,
   - un bloc (9) de matériel contenu dans la partie de matériel, pour retraiter la valeur décalée de X et sortir une valeur déduite de la valeur décalée de X,
   - des deuxièmes moyens (50) de calcul de la partie de logiciel pour calculer un facteur kf de correction approprié en fonction de K et de p$^{sv}$, et
   - des moyens dans la partie (100) de logiciel, pour multiplier par le facteur kf de correction la valeur déduite de la valeur décalée de X afin d'obtenir la grandeur qui correspond à l'application du bloc (9) de matériel sur X*K ou X*1/K.

10. Circuit électronique suivant la revendication 9,
    **caractérisé en ce que**
    le décalage de position est sv = round(log$_p$ K), round(·) étant l'arrondi de l'argument au nombre entier le plus proche.

11. Circuit électronique suivant la revendication 9 ou 10,
    **caractérisé en ce que**
    le facteur Kf de correction a pour une division la valeur (p$^{sv}$) /K ou pour une multiplication la valeur K/p$^{sv}$.

12. Circuit électronique suivant l'une des revendications 9 à 11,
    **caractérisé en ce que**
    la valeur X se modifie lorsque l'on effectue une pluralité de calculs d'une grandeur, qui dépend du résultat du calcul d'une multiplication X·K ou d'une division X·1/K, sensiblement plus vite que la valeur K.

13. Circuit électronique suivant l'une des revendications 9 à 12,
    **caractérisé en ce que**
    les moyens (100) de multiplication par le facteur Kf de correction de la valeur déduite de la valeur décalée de X sont réalisés dans la partie de logiciel.

14. Circuit électronique suivant l'une des revendications 9 à 13,
**caractérisé par**
un état de saturation pour saturer la valeur décalée de X.

15. Circuit électronique suivant l'une des revendications 9 à 14,
**caractérisé en ce que**
le décaleur de position pouvant être commandé est un barrel-shifter (80).

16. Circuit électronique suivant l'une des revendications 9 à 15,
**caractérisé en ce que**
le circuit est conçu pour le calcul de la puissance d'un signal dans un réseau de téléphonie mobile, notamment du signal transmis par le canal DPCH et/ou du signal transmis par le canal CPICH en UMTS.

17. Circuit électronique pour la mise en oeuvre d'une évaluation SINR dans un système de communication UMPS ayant un circuit suivant la revendication 16, dans lequel la partie de matériel comprend

- un premier bloc (210) de matériel, pour effectuer un calcul de puissance DPCH,
- un deuxième bloc (220) de matériel, pour effectuer un calcul de puissance CPICH, et
- un troisième bloc (230) de matériel, pour effectuer un calcul de puissance de bruit,

et dans lequel la partie de logiciel comprend

- un processeur (DSP), pour retraiter des données sur la base des grandeurs calculées dans les blocs (210, 220, 230) de matériel.

# FIG 1
## Stand der Technik

$$b = \frac{1}{K}\sum_{k=1}^{K} a_k$$

vorausgehender HW-Block (1)

Akkumulator (3)

Skalierer (8)

nachfolgender HW-Block (9)

Register (7)

Invertierung (5)

Hardware-Bereich

Firmware-Bereich

EP 1 672 480 B1

**FIG 2**

vorausgehender HW-Block — 1

$a_k$

Akkumulator — 3

$\tilde{b} = \frac{1}{K'} \sum_{k=1}^{K} a_k$

$B_a$

Skalierer — 80

20

Register — 70

$B_i$

$\tilde{b} \quad B\tilde{b}$

nachfolgender HW-Block — 9

$\tilde{b} \rightarrow b$ — 100

FW-Block — 110

$\frac{K'}{K}$

FW-Berechnung — 50

60

$K$

Hardware-Bereich

Firmware-Bereich

$K' = 2^{\text{round}(\log_2 K)}$

**FIG 3**

SINR-Schätzung

200

210 — DPCH-Leistungsberechnung

cell-accu

CSQR

DPCH-Symbole (xdata)

FIR₁

sc12

Amplituden-verhältnis-berechnung

Signal-leistung

(W$_D$) zu Firmware (DSP)

220 — CPICH-Leistungsberechnung

cell-accu

CSQR

Kanalgewichte (h)

FIR₂

sc33

CPICH Leistung (W$_C$)

$\sqrt{W_D/W_C}$

240

Amplituden-verhältnis

(A) zu Firmware (DSP)

CS-Schätzung

DIV

cse_scale

Normierungs-faktor

(F)

zu Hard-ware (MRC)

250

230 —

sub

CSQR

cell-accu

CPICH-Symbole (y)

Kanalgewichte (h)

FIR₃

sc22

CPICH-Rauschleistungsberechnung

(N) zu Firmware (DSP)

Rausch-leistung

EP 1 672 480 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003131037 A1

- WO 0072188 A